(19) **Europäisches Patentamt / European Patent Office / Office européen des brevets**

(11) **EP 2 657 734 B1**

(12) # EUROPEAN PATENT SPECIFICATION

(45) Date of publication and mention
of the grant of the patent:
**30.10.2019 Bulletin 2019/44**

(51) Int Cl.:
**G02B 6/028** *(2006.01)*  **G02B 6/036** *(2006.01)*

(21) Application number: **13165638.1**

(22) Date of filing: **26.04.2013**

(54) **Hybrid single and multimode optical fiber for a home network**

Hybride Einzel- und Mehrmodus-Glasfaser für ein Heimnetzwerk

Fibre optique multimode et mode unique hybride pour réseau domestique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2012 PCT/IB2012/001174**

(43) Date of publication of application:
**30.10.2013 Bulletin 2013/44**

(73) Proprietor: **Draka Comteq BV**
**1083 HJ Amsterdam (NL)**

(72) Inventors:
• **Molin, Denis**
**91210 DRAVEIL (FR)**

• **Sansonetti, Pierre**
**91120 PALAISEAU (FR)**
• **Sillard, Pierre**
**78150 LE CHESNAY (FR)**

(74) Representative: **Vidon Brevets & Stratégie**
**16B, rue de Jouanet**
**BP 90333**
**35703 Rennes Cedex 7 (FR)**

(56) References cited:
| | |
|---|---|
| JP-A- 2 073 203 | JP-A- H01 113 708 |
| US-A1- 2002 041 737 | US-A1- 2002 114 599 |
| US-A1- 2004 202 423 | US-A1- 2005 163 449 |
| US-A1- 2007 196 061 | US-A1- 2010 158 460 |
| US-B1- 6 393 189 | |

**Description**

## 1. FIELD OF THE INVENTION

The invention relates to fiber optic transmission, and, more specifically, to an optical fiber for a home network that supports both single-mode and multimode transmissions.

## 2. TECHNOLOGICAL BACKGROUND

An optical fiber is conventionally constituted of an optical core, which transmits an optical signal, and of an optical cladding, which confines the optical signal within the optical core. To that end the refractive index of the core, $n_c$, is greater than the one of the cladding, $n_g$. An optical fiber is generally characterized by a refractive index profile that associates the refractive index (n) with the radius (r) of the optical fiber: the distance r with respect to the center of the optical fiber is shown on x-axis and the difference between the refractive index at radius r and the refractive index of the optical cladding is shown on y-axis.

Nowadays, two main categories of optical fibers exist: multimode fibers and single-mode fibers. In a multimode fiber, for a given wavelength, several optical modes are propagated simultaneously along the optical fiber, whereas in a single-mode fiber, the higher order modes (hereafter called HOMs) are cut-off or highly attenuated.

Single-mode fibers are commonly used for long-distance applications, such as access networks. To obtain an optical fiber capable to transmit a single-mode optical signal, a core with a relatively small diameter is required (typically between 5 $\mu$m and 11 $\mu$m). To meet requirements of high bandwidth applications for the access networks (for example 10Gbps), standard single-mode fibers require use of a modulated single-mode laser emitter tuned to work typically at a wavelength of 1550 nm.

Multimode fibers are commonly used for short-distance applications requiring a high bandwidth, such as local area networks (LANs) and multi-dwelling units (MDUs), more generally known as in-building networks. The core of a multimode fiber typically has a diameter of 50 $\mu$m, or 62,5 $\mu$m. Multimode fibers have been the subject of international standardization, which define criteria of bandwidth, of numerical aperture, and of core diameter for a given wavelength. The OM3 and OM4 standards have been adopted to meet the demands of high-bandwidth applications (typically 10Gbps) over long distances (a few tens to a few hundreds of meters), such as in the Ethernet high speed transmission networks. The OM3 standard requires, at a wavelength of 850 nm, an efficient modal bandwidth (hereafter called EMB) of at least 2 000 MHz.km to assure error-free multimode transmissions of 10 Gbps up to a distance of 300 m. The OM4 standard requires, at a wavelength of 850 nm, an EMB of at least 4 700 MHz.km to assure error-free multimode transmissions of 10 Gbps up to a distance of 400 m.

The most prevalent multimode fibers in telecommunications are the refractive graded-index profile optical fibers. Such a refractive index profile guaranties, by minimizing the intermodal dispersion (i.e. the difference between the propagation delay times or group velocity of the optical modes along the optical fiber), a high modal bandwidth for a given wavelength.

For the development of an optical home network, the choice of the category of optical fiber category is critical. Multimode fiber is a cost effective solution for optical data networks. Thanks to their wider numerical aperture and core diameter, and their low modal dispersion provided by their graded-index core profile, multimode fibers can support efficiently 10Gbps optical signals emitted by cost effective light sources based solutions (such as Vertical Cavity Surface Emitting Laser or VCSEL), whereas single-mode fibers require expensive and tolerant single-mode transceivers. In particular the connection of the light source with the single-mode fiber (launching conditions) requires tighter alignment tolerances than with the multimode fiber.

However, since the optical home network is expected to be connected to the outside access networks, which mainly use single-mode technology because of longer reach requirements, the problem of interoperability with single-mode fibers needs further considerations.

In practice, multimode fibers are not designed to be interconnected with single-mode optical transmission systems. A home network can be seen as a network of optical fibers that enables the users to connect devices at both ends of the network. Today, the devices are likely to implement multimode optical transmission based technologies that require multimode fibers, whilst tomorrow they could be designed to operate also with a single-mode based technology. Thus the installation of optical fiber, which is relatively costly, would have to be repeated once the access networks be ready to work with the optical home networks.

It is therefore desirable to provide an optical fiber for a home network that can transmit both error free multimode optical signals at an operating wavelength of the home network, for example 850 nm, and error free single-mode optical signals at an operating wavelength of an access network, for example 1550 nm.

One proposed known solution would consist of using a standard multimode fiber that has a refractive graded-index profile optimized for providing error-free transmission with a broad bandwidth at a wavelength of 850 nm. Nevertheless, when a single-mode source operating at a wavelength of 1550 nm is coupled to the standard multimode fiber, the optical signal injected in the fiber stimulates, mainly but unfortunately not only the fundamental optical mode, but also the HOMs within the optical fiber. Indeed, a part of the optical power is coupled into the fundamental mode of the standard multimode fiber and almost all the remaining power is coupled into the set of HOMs of the fiber (that corresponds to parasitic signal or an optical noise). Since the different modes have different propagation delay times and propagation constants, therefore, on the receiver side, both optical signals carried by the fundamental mode and the HOMs interfere, leading to power fluctuations that degrade the quality of the optical transmission. Therefore, due to mode field mismatch at 1550 nm between the fundamental modes carried by a standard multimode fiber and a standard single-mode fiber, such a standard multimode fiber is not adapted to an interconnection with a single-mode optical transmission system.

In practice, to perform well in a high-bandwidth application, an optical fiber should have the highest quality of the optical transmission. For a given wavelength, this criterion may be characterized by the optical mode coupling ratio, which is given by the following equation:

$$\frac{|\gamma|^2}{\sum_i |\beta_i|^2} = \frac{\left|\left\langle E_{SMF}, E_{MMF}\right\rangle\right|^2}{\sum_i \left|\left\langle E_{SMF}, E_{MMF}^{(i)}\right\rangle\right|^2}$$

wherein:

$\gamma$ is the optical power coupled into the fundamental mode;
$\beta_i$ is the optical power coupled into the higher order modes (HOMs), with $i \geq 1$;
$E_{SMF}$ is the electrical field of the fundamental mode of the single mode fiber;

$E_{MMF}$ is the electrical field of the fundamental mode of the multimode fiber; $\left\langle E_1 | E_2 \right\rangle = \iint E_1^* \cdot E_2 \cdot dS$ is the scalar product of fields $E_1$ and $E_2$.

This equation defines the ratio of optical power coupled between the fundamental mode and the HOMs. Less the optical power is coupled into the HOMs, more the optical transmission quality of the fiber is improved.

The Australian patent document AU 2002/100296 discloses an optical fiber comprising a single-mode core part, which has a first refractive index, surrounded by a multimode core part, which has a second refractive index, finally surrounded by a cladding which has a third refractive index. Nevertheless, this document does not describe the conditions for the fiber profile to enable sufficient error free single-mode transmission at 1550 nm. The disclosed optical fiber further presents a relatively low bandwidth at 850 nm. This document does not address the problem of reduction of noise caused by the HOMs of the optical fiber.

The French patent document FR 2 441 585 discloses a single-mode or multimode optical fiber with a central single-mode core and a multimode sheath for data transmission. In particular, the disclosed optical fiber does not exhibit a refractive graded-index core profile, which is critical for high speed performances at 850nm. The latter document does not describe the conditions for the fiber profile to provide sufficient error free single-mode and multimode transmission. Nor does not address the problem of reduction of the optical power coupled into the HOMs of the optical fiber. A multimode fiber according to the state of the art is known from US-A-20040202423.

## 3. GOALS OF THE INVENTION

The invention, in at least one embodiment, is aimed especially at overcoming these different drawbacks of the prior art.

More specifically, a goal of at least one embodiment of the invention is to provide a hybrid optical fiber for an optical home network that combines features of multimode (like the ability to be used with high-speed VCSEL-based sources for instance) and single-mode optical fibers with an adequate trade-off in terms of optical properties, for high-data rate applications.

In other words, a goal of the invention is to provide an optical fiber that can transmit error free multimode optical signals at an operating wavelength of the home network (typically 850 nm) and error free single-mode optical signals at an operating wavelength of an access network (typically 1550 nm).

It is also an aim of at least one embodiment of the invention to provide an optical fiber having an improved optical mode-coupling ratio for single-mode transmission, while keeping a broad bandwidth for multimode transmission over a few tens of meters.

It is also an aim of at least one embodiment of the invention to provide an optical fiber that presents a relatively low modal dispersion for the multimode transmission and that sustains a fundamental mode similar to that in a standard single-mode optical fiber.

It is also an aim of at least one embodiment of the invention to provide an optical fiber that is simple to manufacture and costs little.

## 4. SUMMARY OF THE INVENTION

In one particular embodiment of the invention, it is proposed an optical fiber according to claim 1.

The general principle is to propose a hybrid optical fiber that includes a multisegmented optical core exhibiting a refractive graded-index profile typically used to support multimode transmission in which a step-index is added at the center of the optical core, the profile parameters $a_s$ and $\Delta_s$ of this step-index as well as $\Delta_d$ of the depressed area being tuned so as to provide an optical fiber that transmits both error free multimode optical signals and error free single-mode optical signals.

Indeed, the astute implementation of such a refractive index profile n(r) of the optical core, as well as the choice of an adequate value of the parameters $a_s$ and $\Delta_s$, lead to adapt the fundamental mode of the optical fiber such that the optical power coupled into the fundamental mode is maximized at the wavelength of the single-mode transmission (1550 nm for example), while preserving a relatively reduced modal dispersion at the wavelength of the multimode transmission (850 nm for example).

The refractive index profile of the second core region presents the typical characteristics of a multimode fiber, for example, operating at a wavelength of 850 nm.

The first core region is used to have a radial portion of the optical fiber that has a step-index profile whose the characteristics with respect to the second region core enables to impose the single-mode transmission conditions when single-mode optical signals are injected inside the fiber, while keeping the multimode characteristics of the optical fiber when multimode optical signals are injected inside the fiber.

The invention is thus based on an optical mode matching that, thanks to the refractive profile n(r) defined above, enables to combine both features of a multimode optical fiber and a single-mode optical fiber with an adequate trade-off in terms of optical properties.

In addition, an optical fiber according to the invention is simple to manufacture and costs little, since all that is needed is to adapt the doping of the optical core as a function of the desired refractive index profile.

It should noted that the technical effects obtained for an optical fiber of the invention with a constant refractive index first core region are the same that those described above, for an optical fiber of the invention with a refractive graded-index first core region.

Advantageously, the non-dimensional parameter $\alpha$ is comprised between 1 and 5.

Advantageously, the width $w_d$ of the depressed area is comprised between 1 and 8 $\mu$m.

Adding a depressed area at the periphery of the first core region leads to improve even more the modal bandwidth at 850 nm.

In another embodiment, the invention pertains to an optical system, such as an optical home network, comprising at least one optical fiber described here above in any of its different embodiments.

## 5. LIST OF FIGURES

Other features and advantages of embodiments of the invention shall appear from the following description, given by way of an indicative and non-exhaustive examples and from the appended drawings, of which:

- Figure 1 graphically provides the refractive index profile of an optical fiber
- Figure 2 graphically depicts the optical mode coupling ratio as a function of parameters of core index profile of a first exemplary optical fiber according to the invention;
- Figure 3 graphically depicts the achievable 10GbE reach as a function of parameters of core index profile of the first exemplary optical fiber according to the invention;
- Figure 4 represents, on a same graphic, the curves obtained at figures 2 and 3;
- Figure 5 graphically depicts the optical mode coupling ratio as a function of parameters of core index profile of a second exemplary optical fiber according to the invention;
- Figure 6 graphically depicts the achievable 10GbE reach as a function of parameters of core index profile of the second exemplary optical fiber according to the invention;
- Figure 7 represents, on a same graphic, the curves obtained at figures 5 and 6;
- Figure 8 graphically depicts the optical mode coupling ratio as a function of parameters of core index profile of a third exemplary optical fiber according to the invention;

- Figure 9 graphically depicts the achievable 10GbE reach as a function of parameters of core index profile of the third exemplary optical fiber according to the invention;
- Figure 10 represents, on a same graphic, the curves obtained at figures 8 and 9;
- Figure 11 graphically provides the refractive index profile of an optical fiber according to a second embodiment of the invention.

## 6. DETAILED DESCRIPTION

In all of the figures of the present document, identical elements and steps are designated by the same numerical reference sign.

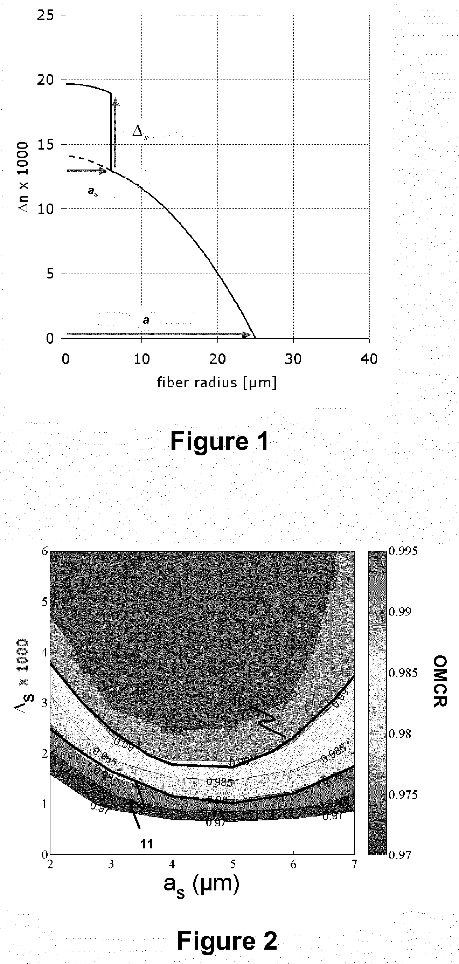

**Figure 1** depicts the refractive index profile of an optical fiber. It describes the relationship between the refractive index value n and the distance r from the center of the optical fiber.

The fiber of the invention is a hybrid optical fiber having a refractive index profile n(r) defined by the following equation:

$$n(r) = \begin{cases} n_0 \cdot \sqrt{1 - 2 \cdot \Delta \cdot \left(\dfrac{r}{a}\right)^\alpha} + \Delta_s & r < a_s \\[3mm] n_0 \cdot \sqrt{1 - 2 \cdot \Delta \cdot \left(\dfrac{r}{a}\right)^\alpha} & a_s \le r < a \\[3mm] n_0 \cdot \sqrt{1 - 2 \cdot \Delta} & a \le r \end{cases}$$

wherein:

$a_s$ is the radius of the first core region;
$a$ is the radius of the second core region;
$\Delta_s$ is a refraction index-step defined by the refractive index difference between the first core region and the second core region at $r = a_s$;
$n_0$ is the maximal refractive index of the second core region;
$\alpha$ is a non-dimensional parameter that defines the index profile shape of the second core region, and $\alpha \ge 1$;

$\Delta$ is the normalized refractive index difference, and $\Delta = \dfrac{n_0^2 - n_1^2}{2n_0^2}$, $n_1$ being the minimal refractive index of the second core region.

The optical fiber comprises an optical core for $0 < r < a$ and an optical cladding $a \le r$ surrounding the optical core. The fiber's optical cladding has a standard constant refractive index such as: $n_0 \cdot \sqrt{1 - 2 \cdot \Delta}$.

The fiber's optical core comprises a first core region having a radius $a_s$ and a refractive step-index with respect to a second core region, with a refractive index profile such as:

$$n_0 \cdot \sqrt{1 - 2 \cdot \Delta \cdot \left(\dfrac{r}{a}\right)^\alpha} + \Delta_s \quad \text{for } r < a_s$$

The second core region, which have a radius $a$, immediately surrounds the first core region and has a refractive graded-index profile (also known as "alpha index profile") with respect to the optical cladding such as:

$$n_0 \cdot \sqrt{1 - 2 \cdot \Delta \cdot \left(\dfrac{r}{a}\right)^\alpha} \quad \text{for } a_s \le r < a$$

The second core region presents the typical characteristics of a multimode fiber operating at a wavelength of 850 nm.

The first core region is used to have a radial portion of the optical fiber that has a step-index profile whose the characteristics ($\Delta_s$ and $a_s$) with respect to the second region core enables to impose the single-mode transmission conditions operating at a wavelength of 1550 nm, while keeping the multimode characteristics of the optical fiber at 850 nm.

Indeed, the refractive index profile depicted in figure 1 exhibits a graded-index core with a step index positioned in the center of the optical core that is tuned to provide optical mode matching at 1550 nm between the fundamental mode of the hybrid optical fiber of the invention and the fundamental mode of a standard single-mode fiber.

In this example, the first core region's radius $a$ is about 25 $\mu$m (with a tolerance of $\pm$ 2 $\mu$m) and the first core region's radius $a_s$ is about 6 $\mu$m. The parameter $\alpha$ of the optical core's index profile is about 2. The refractive index difference $\Delta_s$ corresponding to the step-index may have a value of between about $3.10^{-3}$ and $12.10^{-3}$.

Generally speaking, the refractive index difference $\Delta_s$ and the radius $a_s$ of the first core region can be optimized

$$\left(\frac{|\gamma|^2}{\sum_i |\beta_i|^2}\right)$$

in order to achieve the best trade-off in terms of optical properties, i.e. a high optical mode coupling ratio for single-mode transmissions at 1550 nm and a low dispersion modal (or a high bandwidth) for multimode transmissions at 850 nm.

In a particular embodiment, the refractive index difference $\Delta_s$ and the radius $a_s$ of the first core region can be such that they satisfy the following inequality:

$$0.0549 \cdot a_s^4 - 0.9053 \cdot a_s^3 + 5.483 \cdot a_s^2 - 14.39 \cdot a_s + 13.75 < 1000 \cdot \Delta_s < 1.11 \cdot a_s^2 - 6.9145 \cdot a_s + 17.94$$

In a preferably embodiment, the refractive index difference $\Delta_s$ and the radius $a_s$ of the first core region are such that they satisfy the following inequality:

$$0.0373 \cdot a_s^4 - 0.6145 \cdot a_s^3 + 4.0286 \cdot a_s^2 - 12.217 \cdot a_s + 14.739 < 1000 \cdot \Delta_s < 0.9821 \cdot a_s^2 - 6.5036 \cdot a_s + 16.7$$

It should be noted that these two empiric inequalities each enables to improve the fundamental mode matching at 1550 nm. These empiric inequalities have been established by the inventors assuming that the fundamental mode matching can be assessed indirectly by the comparison to the mode field diameter of the fundamental mode of the hybrid optical fiber of the invention at 1550 nm and the fundamental mode of a standard single-mode fiber. Especially, these two inequalities correspond to a mode field diameter difference of about 0,8 $\mu$m and 0,5 $\mu$m respectively. The fundamental mode diameter is smaller, the optical power coupled into the fundamental mode ($|\gamma|^2$) is higher (and the optical power coupled into the HOMs $\left(\sum_i |\beta_i|^2\right)$ is lower).

The advantages of the invention will be more evident by comparing optical fibers of the prior art with an exemplary optical fiber according to the invention. Table 1 below shows fiber profile parameters of a standard multimode fiber that has a refractive graded-index profile optimized for providing error-free transmission at a wavelength of 850 nm. That prior art fiber is subjected to a optical signal of a wavelength $\lambda$ of 1550nm.

| Table 1 | | | | | | |
|---|---|---|---|---|---|---|
| **Examples** | $\alpha$ | $\Delta$ | **a** | $\lambda$ | $|\gamma|^2$ | $\sum_i |\beta_i|^2$ |
| 1 | 2 | 1.0% | 25 $\mu$m | 1550 nm | 95.3% | 4.7% |
| 2 | 2 | 2.0% | 31.25 $\mu$m | 1550 nm | 96.8% | 3.2% |

Table 2 below shows fiber profile parameters of a hybrid optical fiber according to the invention. The optical fiber exhibits a refractive index profile that respect the equation n(r) described above, with the refractive index difference $\Delta_s$ and the radius $a_s$ of the first core region that comply with the first inequality:

$$0.0549 \cdot a_s^4 - 0.9053 \cdot a_s^3 + 5.483 \cdot a_s^2 - 14.39 \cdot a_s + 13.75 < 1000 \cdot \Delta_s < 1.11 \cdot a_s^2 - 6.9145 \cdot a_s + 17.94$$

| Table 2 | | | | | | | |
|---|---|---|---|---|---|---|---|
| **Examples** | $\alpha$ | $\mathbf{a_s}$ | $\Delta_{\mathbf{S}}$ | **a** | $\lambda$ | $\lvert\gamma\rvert^2$ | $\sum_i \lvert\beta_i\rvert^2$ |
| 1 | 2 | 2 $\mu$m | 6 | 25 $\mu$m | 1550 nm | 99.93% | 0.07% |
| 2 | 2 | 2 $\mu$m | 5 | 25 $\mu$m | 1550 nm | 99.66% | 0.34% |
| 3 | 2 | 2 $\mu$m | 7 | 25 $\mu$m | 1550 nm | 99.94% | 0.06% |
| 4 | 2 | 3 $\mu$m | 3 | 25 $\mu$m | 1550 nm | 99.61% | 0.39% |

From these two tables, it should be notice that, for an optical fiber's length of about 30 m, the optical power coupled in the fundamental mode of the prior art fiber does not exceed 97%, whereas the optical power coupled in the fundamental mode of the optical fiber of the invention clearly exceeds 99%.

**Figure 2** graphically depicts simulated optical mode coupling ratio (OMCR) measurements as a function of the refractive step-index difference $\Delta_s$ and the radius $a_s$ of the first core region of an optical fiber for which the core radius is of 25 $\mu$m and the numerical aperture of 0,200.

The left-hand y-axis depicts the first core region's refractive step-index difference $\Delta_s$ and the x-axis depicts the first core region's radius $a_s$. The values of optical mode coupling ratio corresponding to a given pair of parameters ($\Delta_s$, $a_s$) are illustrated in shades of gray in the right-hand y-axis.

The curves 10 is defined by the following inequality, assuming that the optical power coupled into the fundamental mode is upper than 98% at the wavelength of 1550 nm (single-mode transmission):

$$\Delta_s > 0.17173 \ a_s^2 - 1.6926 \ a_s + 5.1835$$

The curves 11 is defined by the following inequality, assuming that the optical power coupled into the fundamental mode is upper than 98% at the wavelength of 1550 nm (single-mode transmission):

$$\Delta_s > 0.31742 \ a_s^2 - 2.9046 \ a_s + 8.3221$$

The values of OMCR situated above curves 10 and 11 enable to establish the values of the parameters $\Delta_s$ and $a_s$ of the optical fiber's first core region for which the fundamental mode-matching is provided at a ratio of at least 98%, respectively 99%, at the wavelength of 1550 nm.

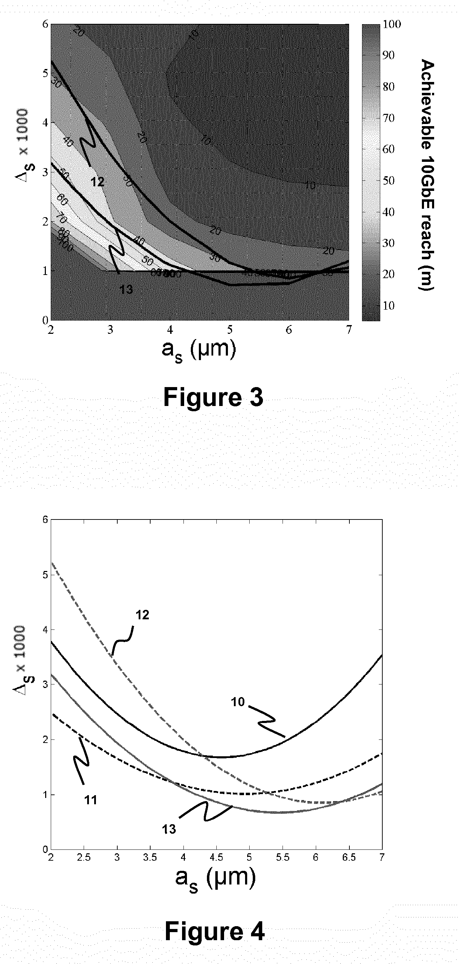

**Figure 3** graphically depicts simulated achievable 10GbE reach as a function of the refractive step-index difference $\Delta_s$ and the radius $a_s$ of the first core region of an optical fiber for which the core radius is of 25 $\mu$m and the numerical aperture of 0,200.

The left-hand y-axis depicts the first core region's refractive step-index difference $\Delta_s$ and the x-axis depicts the first core region's radius $a_s$. The values of achievable 10GbE reach, expressed as m (meter), at the wavelength of 850 nm, corresponding to a given ($\Delta_s$, $a_s$) pair are illustrated in shades of gray in the right-hand y-axis.

The term "10GbE reach" refers to the maximum guaranteed transmission distance for which an optical fiber can operate at a nominal data rate of 10Gbps with a bit error rate (or BER) of less than $10^{-12}$ when used with 10G-BASE-S sources (the 10G-BASE-S sources are standardized sources for 10GbE applications (see IEEE 802.3).

The curves 12 is defined by the following inequality, assuming 10GbE reach of 30m:

$$\Delta_s < 0.26184 \ a_s^2 - 3.1935 \ a_s + 10.5832$$

The curves 13 is defined by the following inequality, assuming a 10GbE reach of 50m:

$$\Delta_s < 0.21308 \ a_s^2 - 2.3168 \ a_s + 6.9690$$

The values situated below curves 12 and 13 enable to establish the values of the parameters $\Delta_s$ and $a_s$ of the optical fiber's first core region for which the modal dispersion of the optical fiber at the wavelength of 850 nm is sufficiently low so that the optical fiber can be employed in high data rate applications (e.g. 10 GbE applications) over respectively 30 m and 50 m.

**Figure 4** depicts on a same graphic the curves 10, 11, 12, 13 obtained at figures 2 and 3. This figure shows that the optical fiber has a pair of values ($\Delta_s$, $a_s$) for which the corresponding point should be situated between the curves 10, 12 or between the curves 10, 13 or between the curves 11, 12 so that this optical fiber provides a satisfactory trade-off between the optical mode coupling ratio for single-mode transmissions at 1550 nm and the modal bandwidth for multimode transmissions at 850 nm. For example, an optical fiber that possesses a first core region having a refractive step-index difference $\Delta_s$ of 2,5.10$^{-3}$ and a radius of 3,5 $\mu$m will exhibit a value of OMCR of at least 99% at 1550 nm and an achievable 10GbE reach of at least 30 meters at 850 nm. In that example, the modal dispersion at 850nm is low enough to allow for an error free multimode transmission at 850nm using off-the-shelf 10Gbps transceivers (typically implementing a VCSEL technology) and an error free single-mode transmission at 1550nm.

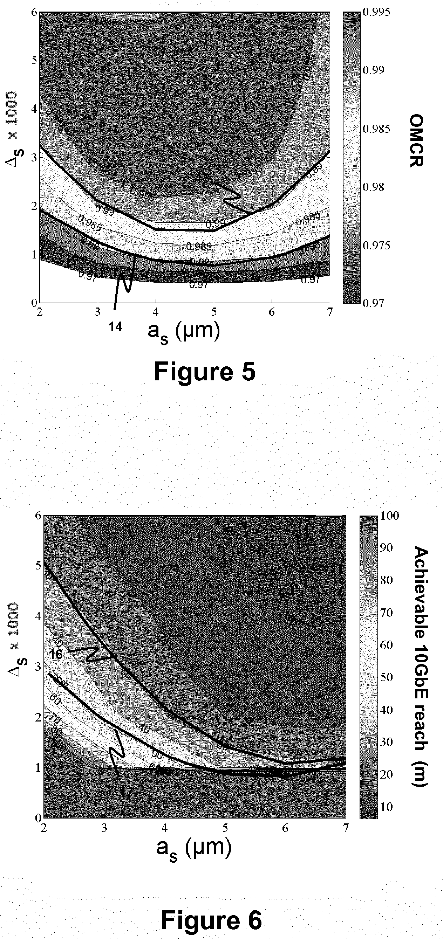

**Figure 5** graphically depicts simulated optical mode coupling ratio (OMCR) measurements as a function of the refractive step-index difference $\Delta_s$ and the radius $a_s$ of the first core region of an optical fiber for which the core radius is of 31,25 $\mu$m and the numerical aperture of 0,275.

The curves 14 is defined by the following inequality, assuming that the optical power coupled into the fundamental mode is upper than 98% at the wavelength of 1550 nm (single-mode transmission):

$$\Delta_s > 0.13774 \, a_s{}^2 \, -1.3462 \, a_s + 4.0572$$

The curves 15 is defined by the following inequality, assuming that the optical power coupled into the fundamental mode is upper than 98% at the wavelength of 1550 nm (single-mode transmission):

$$\Delta_s > 0.2839 \, a_s{}^2 \, -2.5787 \, a_s + 7.2947$$

The values of OMCR situated above curves 14 and 15 enable to establish the values of the parameters $\Delta_s$ and $a_s$ of the optical fiber's first core region for which the fundamental mode-matching is provided at a ratio of at least 98%, respectively 99%, at the wavelength of 1550 nm.

**Figure 6** graphically depicts simulated achievable 10GbE reach as a function of the refractive step-index difference $\Delta_s$ and the radius $a_s$ of the first core region of an optical fiber for which the core radius is of 31,25 $\mu$m and the numerical aperture of 0,275.

The curves 16 is defined by the following inequality, assuming a 10GbE reach of 30 m:

$$\Delta_s < 0.22044 \, a_s{}^2 \, -2.7607 \, a_s + 9.7057$$

The curves 17 is defined by the following inequality, assuming a 10GbE reach of 50 m:

$$\Delta_s < 0.15979 \, a_s{}^2 \, -1.8078 \, a_s + 5.9286$$

The values situated below curves 16 and 17 enable to establish the values of the parameters $\Delta_s$ and $a_s$ of the optical fiber's first core region for which the modal dispersion of the optical fiber at the wavelength of 850 nm is sufficiently low so that the optical fiber of can be employed in high data rate applications (typically 10 GbE applications) over respectively 30 m and 50 m.

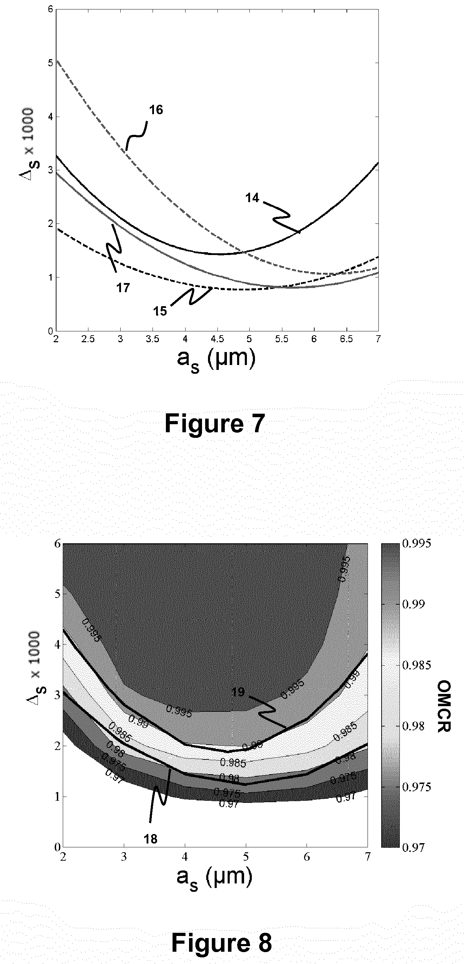

**Figure 7** depicts on a same graphic the curves 14, 15, 16, 17 obtained at figures 5 and 6. This figure shows that the optical fiber has a pair of values ($\Delta_s$, $a_s$) for which the corresponding point should be situated between the curves 14 and 16 or between the curves 14 and 17 or between the curves 15 and 16 or 15 and 17, so that this optical fiber provides a satisfactory trade-off between the optical mode coupling ratio at 1550 nm and the modal bandwidth at 850 nm. For example, an optical fiber that possesses a first core region having a refractive step-index difference $\Delta_s$ of 2,0.10$^{-3}$ and a radius of 4 $\mu$m will exhibit a value of OMCR of at least 99% at 1550 nm and an achievable 10GbE reach of at least 30 meters at 850 nm. In that example, the modal dispersion at 850nm is low enough to allow for an error free multimode transmission at 850nm using off-the-shelf 10Gbps transceivers (typically implementing a VCSEL technology) and an error free single-mode transmission at 1550nm.

**Figure 8** graphically depicts simulated optical mode coupling ratio (OMCR) measurements as a function of the refractive step-index difference $\Delta_s$ and the radius $a_s$ of the first core region of an optical fiber for which the core radius is of 40 $\mu$m and the numerical aperture of 0,290.

The curves 18 is defined by the following inequality, assuming that the optical power coupled into the fundamental mode is upper than 98% at the wavelength of 1550 nm (single-mode transmission):

$$\Delta_s > 0.20185\ a_s^2\ -2.0205\ a_s + 6.2914$$

The curves 19 is defined by the following inequality, assuming that the optical power coupled into the fundamental mode is upper than 98% at the wavelength of 1550 nm (single-mode transmission):

$$\Delta_s > 0.34616\ a_s^2\ -3.211\ a_s + 9.3320$$

The values of OMCR situated above curves 18 and 19 enable to establish the values of the parameters $\Delta_s$ and $a_s$ of the optical fiber's first core region for which the fundamental mode-matching is provided at a ratio of at least 98%, respectively 99%, at the wavelength of 1550 nm.

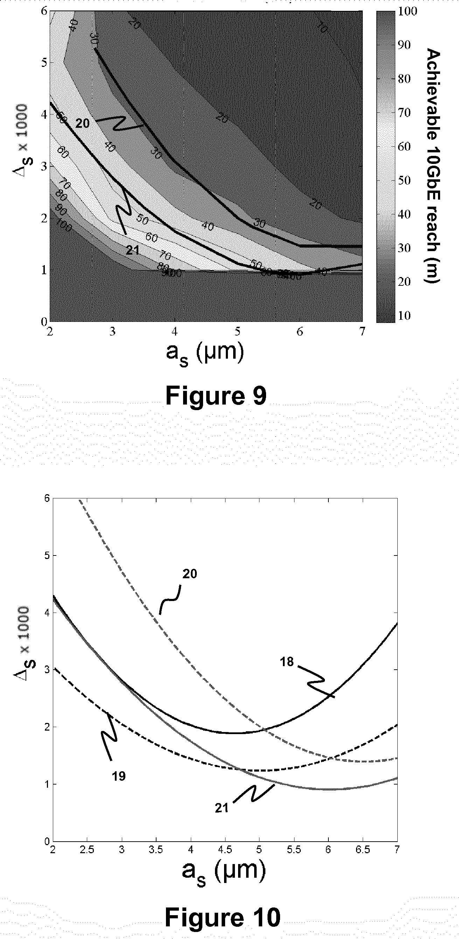

**Figure 9** graphically depicts simulated achievable 10GbE reach as a function of the refractive step-index difference $\Delta_s$ and the radius $a_s$ of the first core region of an optical fiber for which the core radius is of 40 $\mu$m and the numerical aperture of 0,290.

The curves 20 is defined by the following inequality, assuming a 10GbE reach of 30 m:

$$\Delta_s < 0.26946\ a_s^2\ -3.5101\ a_s + 12.8205$$

The curves 21 is defined by the following inequality, assuming a 10GbE reach of 50 m:

$$\Delta_s < 0.20605\ a_s^2\ -2.4798\ a_s + 8.3655$$

The values situated below curves 21 and 22 enable to establish the values of the parameters $\Delta_s$ and $a_s$ of the optical fiber's first core region for which the modal dispersion of the optical fiber at the wavelength of 850 nm is sufficiently low so that the optical fiber can be employed in high data rate applications (e.g. 10 GbE applications) over respectively 30 m and 50 m.

**Figure 10** depicts on a same graphic the curves 18, 19, 20, 21 obtained at figures 8 and 9. This figure shows that the optical fiber has a pair of values ($\Delta_s$, $a_s$) for which the corresponding point should be situated between the curves 18 and 20 or between the curves 18 and 12 or between the curves 19 and 20 or 19 and 21, so that this optical fiber provides a satisfactory trade-off between the optical mode coupling ratio at 1550 nm and the modal bandwidth at 850 nm. For example, an optical fiber that possesses a first core region having a refractive step-index difference $\Delta_s$ of $2,0.10^{-3}$ and a radius of 4 $\mu$m will exhibit a value of OMCR of at least 99% at 1550 nm and an achievable 10GbE reach of at least 30 meters at 850 nm. In that example, the modal dispersion at 850nm is low enough to allow for an error free multimode transmission at 850nm using off-the-shelf 10Gbps transceivers (typically implementing a VCSEL technology) and an error free single-mode transmission at 1550nm.

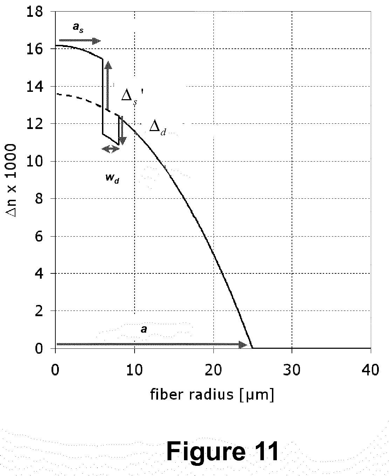

**Figure 11** graphically provides the refractive index profile of an optical fiber according to a second embodiment of the invention. This second embodiment differs from the second embodiment of the invention in that the optical fiber comprises a depressed area positioned between the first core region and the second core region, surrounding immediately the first core region. The depressed area aims at reducing even more the dispersion modal for multimode transmissions at 850 nm.

This depressed area has a width $w_d$ of about 4 $\mu$m and a refractive index difference $\Delta_d$ with respect to the second core region of about $-1,3.\ 10^{-3}$. The refractive index difference $\Delta_s'$ of the step-index first core region is about $2,5.10^{-3}$.

More generally, the width $w_d$ of the depressed area may have a value of between about 1 $\mu$m and 8 $\mu$m.

In practice, the refractive index difference $\Delta_d$ of the depressed area and the refractive index difference $\Delta_s'$ of the first core region may be determined using the following equation: $|\Delta_d| + \Delta_s' = \Delta_s$, wherein $\Delta_s$ satisfies at least one of the inequalities described here above in relation the first embodiment of the invention. For example, the sum of the refractive index difference $|\Delta_d|$ of the depressed area and the refractive index difference $\Delta_s'$ of the first core region may have a value of between about $3.10^{-3}$ and $12.10^{-3}$, with $\Delta_d$ comprised between $-4,5.10^{-3}$ and $-0,5.10^{-3}$.

**Claims**

1. Optical fiber comprising an optical core and an optical cladding surrounding the optical core, **characterized in that** the optical core comprises a first core region and a second core region surrounding the first core region, said optical fiber being **characterized in that** the first and second core regions is such that the optical core has a refractive index profile n(r) defined either by the equation:

$$n(r) = \begin{cases} n_0 \cdot \sqrt{1 - 2 \cdot \Delta \cdot \left(\dfrac{r}{a}\right)^{\alpha}} + \Delta_s & r < a_s \\[3ex] n_0 \cdot \sqrt{1 - 2 \cdot \Delta \cdot \left(\dfrac{r}{a}\right)^{\alpha}} - \Delta_d & a_s \leq r < a_s + w_d \\[3ex] n_0 \cdot \sqrt{1 - 2 \cdot \Delta \cdot \left(\dfrac{r}{a}\right)^{\alpha}} & a_s + w_d \leq r < a \end{cases}$$

or by the equation:

$$n(r) = \begin{cases} n_0 + \Delta_s & r < a_s \\[3ex] n_0 \cdot \sqrt{1 - 2 \cdot \Delta \cdot \left(\dfrac{r}{a}\right)^{\alpha}} - \Delta_d & a_s \leq r < a_s + w_d \\[3ex] n_0 \cdot \sqrt{1 - 2 \cdot \Delta \cdot \left(\dfrac{r}{a}\right)^{\alpha}} & a_s + w_d \leq r < a \end{cases}$$

wherein:

$a_s$ is the radius of the first core region comprised between 1,5 and 4,5 $\mu$m;
a is the radius of the second core region;
$\Delta_s$ is a step-index defined by the refractive index difference between the first core region and the second core region;
$A_d$ is a depressed index area defined by the refractive index difference with respect to the second core region;
$n_0$ is the maximal refractive index of the second core region;
$\alpha$ is a non-dimensional parameter that defines the index profile shape of the second core region, and $\alpha \geq 1$;

$$\Delta = \frac{n_0^2 - n_1^2}{2n_0^2} \ ,$$

$\Delta$ is the normalized refractive index difference, and $n_1$ being the minimal refractive index of the second core region,
and **in that** the depressed index area is positioned to the periphery of the first core region and has a given width $w_d$ with a given width between 1 and 8 um and a refractive index difference $\Delta_d$ with respect to the second core region such that said depressed index area refractive index difference $\Delta_d$, said refractive index difference $\Delta_s$ between the first core region and the second core region and said first core region radius $a_s$ satisfy the following inequality:

$$0.0549 \cdot a_s^4 - 0.9053 \cdot a_s^3 + 5.483 \cdot a_s^2 - 14.39 \cdot a_s + 13.75 < 1000 \cdot (\Delta_s + |\Delta_d|) < 1.11 \cdot a_s^2 - 6.9145 \cdot a_s + 17.94$$

2. Optical fiber according to claim 1, wherein the non-dimensional parameter $\alpha$ is comprised between 1 and 5.

3. Optical system comprising at least one optical fiber according to any one of claims 1 to 2.

**Patentansprüche**

1. Optische Faser mit einem optischen Kern und einer optischen Umhüllung, die den optischen Kern umgibt, **dadurch gekennzeichnet, dass** der optische Kern einen ersten Kernbereich und einen zweiten Kernbereich, der den ersten Kernbereich umgibt, umfasst,
wobei die optische Faser **dadurch gekennzeichnet ist, dass** der erste und zweite Kernbereich derart ausgebildet sind, dass der optische Kern ein Brechungsindexprofil n(r) aufweist, das definiert ist entweder durch die Gleichung:

$$n(r) = \begin{cases} n_0 \cdot \sqrt{1 - 2 \cdot \Delta \cdot \left(\dfrac{r}{a}\right)^{\alpha}} + \Delta_s & r < a_s \\[4mm] n_0 \cdot \sqrt{1 - 2 \cdot \Delta \cdot \left(\dfrac{r}{a}\right)^{\alpha}} - \Delta_d & a_s \leq r < a_s + w_d \\[4mm] n_0 \cdot \sqrt{1 - 2 \cdot \Delta \cdot \left(\dfrac{r}{a}\right)^{\alpha}} & a_s + w_d \leq r < a \end{cases}$$

oder durch die Gleichung:

$$n(r) = \begin{cases} n_0 + \Delta_s & r < a_s \\[4mm] n_0 \cdot \sqrt{1 - 2 \cdot \Delta \cdot \left(\dfrac{r}{a}\right)^{\alpha}} - \Delta_d & a_s \leq r < a_s + w_d \\[4mm] n_0 \cdot \sqrt{1 - 2 \cdot \Delta \cdot \left(\dfrac{r}{a}\right)^{\alpha}} & a_s + w_d \leq r < a \end{cases}$$

wobei:

$a_s$ der Radius des ersten Kernbereichs zwischen 1,5 und 4,5 $\mu$m ist;
$a$ der Radius des zweiten Kernbereichs ist;
$\Delta_s$ ein Stufenindex ist, der durch die Brechungsindexdifferenz zwischen dem ersten Kernbereich und dem zweiten Kernbereich definiert ist;
$\Delta_d$ eine Dämpfungsindexfläche ist, die durch die Brechungsindexdifferenz, bezogen auf den zweiten Kernbereich, definiert ist;
$n_0$ der maximale Brechungsindex des zweiten Kernbereichs ist;
$\alpha$ ein dimensionsloser Parameter ist, der die Indexprofilform des zweiten Kernbereichs definiert, und $\alpha \geq 1$ ist;
$\Delta$ die normalisierte Brechungsindexdifferenz und $\Delta = \dfrac{n_0^2 - n_1^2}{2n_0^2}$ ist, wobei $n_1$ der minimale Brechungsindex des zweiten Kernbereichs ist,
und dadurch, dass die Dämpfungsindexfläche in der Peripherie des ersten Kernbereichs angeordnet ist und eine gegebene Breite $w_d$ mit einer gegebenen Breite zwischen 1 und 8 $\mu$m und eine Brechungsindexdifferenz $\Delta_d$, bezogen auf den zweiten Kernbereich, aufweist, sodass die Dämpfungsindexflächenbrechungsindexdifferenz $\Delta_d$, die Brechungsindexdifferenz $\Delta_s$ zwischen dem ersten Kernbereich und dem zweiten Kernbereich und der erste Kernbereichradius $a_s$ die folgende Ungleichung erfüllen:

$$0{,}0549 \cdot a_s^4 - 0{,}9053 \cdot a_s^3 + 5{,}483 \cdot a_s^2 - 14{,}39 \cdot a_s + 13{,}75 < 1000 \cdot (\Delta_s + |\Delta_d|)$$
$$< 1{,}11 \cdot a_s^2 - 6{,}9145 \cdot a_s + 17{,}94$$

2. Optische Faser nach Anspruch 1, wobei der dimensionslose Parameter *a* zwischen 1 und 5 enthalten ist.

3. Optisches System umfassend mindestens eine optische Faser nach einem der Ansprüche 1 bis 2.

**Revendications**

1. Fibre optique comprenant une âme optique et une gaine optique entourant l'âme optique, **caractérisée en ce que** l'âme optique comprend une première région d'âme et une seconde région d'âme entourant la première région d'âme, ladite fibre optique étant **caractérisée en ce que** les première et seconde régions d'âme sont telles que l'âme optique présente un profil d'indice de réfraction n(r) défini soit par l'équation :

$$n(r) = \begin{cases} n_0 \cdot \sqrt{1 - 2 \cdot \Delta \cdot \left(\dfrac{r}{a}\right)^{\alpha}} + \Delta_s & r < a_s \\[4mm] n_0 \cdot \sqrt{1 - 2 \cdot \Delta \cdot \left(\dfrac{r}{a}\right)^{\alpha}} - \Delta_d & a_s \leq r < a_s + w_d \\[4mm] n_0 \cdot \sqrt{1 - 2 \cdot \Delta \cdot \left(\dfrac{r}{a}\right)^{\alpha}} & a_s + w_d \leq r < a \end{cases}$$

soit par l'équation :

$$n(r) = \begin{cases} n_0 + \Delta_s & r < a_s \\[4mm] n_0 \cdot \sqrt{1 - 2 \cdot \Delta \cdot \left(\dfrac{r}{a}\right)^{\alpha}} - \Delta_d & a_s \leq r < a_s + w_d \\[4mm] n_0 \cdot \sqrt{1 - 2 \cdot \Delta \cdot \left(\dfrac{r}{a}\right)^{\alpha}} & a_s + w_d \leq r < a \end{cases}$$

dans lesquelles :

$a_s$ est le rayon de la première région d'âme compris entre 1,5 et 4,5 $\mu$m;
a est le rayon de la seconde région d'âme ;
$\Delta_s$ est un saut d'indice défini par la différence d'indice de réfraction entre la première région d'âme et la seconde région d'âme ;
$\Delta_d$ est une zone d'indice abaissé définie par la différence d'indice de réfraction par rapport à la seconde région d'âme ;
$n_0$ est l'indice de réfraction maximal de la seconde région d'âme ;
$\alpha$ est un paramètre sans dimension qui définit la forme du profil d'indice de la seconde région d'âme, et $\alpha \geq 1$ ;

$$\Delta = \frac{n_0^2 - n_1^2}{2n_0^2}$$

$\Delta$ est la différence d'indice de réfraction normalisée, et , $n_1$ étant l'indice de réfraction minimal de la seconde région d'âme,

et **en ce que** la zone d'indice abaissé est positionnée à la périphérie de la première région d'âme et présente une largeur $w_d$ donnée, avec une largeur donnée entre 1 et 8 $\mu$m, et une différence d'indice de réfraction $\Delta_d$ par rapport à la seconde région d'âme telle que ladite différence d'indice de réfraction de zone d'indice abaissé $\Delta_d$, ladite différence d'indice de réfraction $\Delta_s$ entre la première région d'âme et la seconde région d'âme et ledit rayon de première région d'âme $a_s$ satisfont l'inégalité suivante :

$$0.0549 \cdot a_s^4 - 0.9053 \cdot a_s^3 + 5.483 \cdot a_s^2 - 14.39 \cdot a_s + 13.75 < 1000 \cdot (\Delta_s + |\Delta_d|) < 1.11 \cdot a_s^2 - 6.9145 \cdot a_s + 17.94$$

2. Fibre optique selon la revendication 1, dans laquelle le paramètre sans dimension $\alpha$ est compris entre 1 et 5.

3. Système optique comprenant au moins une fibre optique selon l'une quelconque des revendications 1 à 2.

**Figure 1**

**Figure 2**

**Figure 3**

**Figure 4**

**Figure 5**

**Figure 6**

**Figure 7**

**Figure 8**

**Figure 9**

**Figure 10**

Figure 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2002100296
- FR 2441585

- US 20040202423 A